# NEUE EUROPÄISCHE PATENTSCHRIFT

(11) **EP 1 277 011 B2**
(45) Veröffentlichungstag und Bekanntmachung des Hinweises auf die Entscheidung über den Einspruch: **10.03.2010**
(45) Hinweis auf die Patenterteilung: 06.09.2006
(21) Anmeldenummer: 01971441.9
(22) Anmeldetag: 11.04.2001
(51) Int. Cl.: F16P 3/08, G05B 19/4063

(54) **MODULARES SICHERHEITSSCHALTGERÄTE-SYSTEM**
MODULAR SAFETY SWITCHGEAR SYSTEM
SYSTEME MODULAIRE POUR COMMUTATEUR DE SECURITE

(30) Priorität: 22.04.2000 DE 10020074
(43) Veröffentlichungstag der Anmeldung: 22.01.2003
(73) Patentinhaber: Pilz GmbH & Co. KG, 73760 Ostfildern (DE)
(72) Erfinder: VEIL, Richard, 70597 Stuttgart (DE); BAUR, Jürgen, 73550 Waldstetten (DE); SCHWENKEL, Hans, 70192 Stuttgart (DE)
(74) Vertreter: Duhme, Torsten
(86) Internationale Anmeldenummer: PCT/EP2001/004160
(87) Internationale Veröffentlichungsnummer: WO 2001/081820

(56) Entgegenhaltungen:
- DE-A- 4 432 759
- DE-A- 19 649 593
- US-A- 4 991 056
- LEUZE LUMIFLEX: 'Connection and Operating Instruction' MODULAR SAFETY INTERFACE
- SICK: 'Operating Instructions' PROGRAMMABLE SAFETY INTERFACE
- SIEMENS: 'Simatic Komponenten für Vollintegrierte Automation' KATALOG ST70 01 Januar 1997,

## Beschreibung

Die vorliegende Erfindung betrifft ein modulares Sicherheitsschaltgeräte-System zum Ein- und sicheren Ausschalten von Aktoren, mit zumindest einem Eingangsmodul zum sicheren Auswerten eines Signal gebers und zum Erzeugen eines Ausgangssignals, und zumindest einem Ausgangsmodul zum sicheren Betätigen des Aktors abhängig von dem Ausgangssignal des Eingangsmoduls, wobei zumindest das Eingangsmodul in unterschiedlichen Betriebsarten betreibbar ist.

Sicherheitsschaltgeräte sind allgemein bekannt. Sie dienen dazu, das Signal eines Signal gebers, bspw. eines Not-Aus-Schalters, eines Schutztürpositionsschalters, etc. sicher auszuwerten und einen oder mehrere sichere Ausgangskontakte eines Ausgangskreises anzusteuern. Über diese Ausgangskontakte werden dann Aktoren, bspw. Schütze, Ventile oder Motoren, gefährlicher Maschinenteile, bspw. Sägeblätter, Roboterarme, Hochspannungseinrichtungen etc., in einen sicheren Zustand gebracht. Die An-melderin bietet unter dem Namen "PNOZ" eine Vielzahl von unterschiedlichen Sicherheitsschaltgeräte-Typen an. Ferner sind in "Maschinensicherheit", Winfried Gräf, Hüttig Verlag, 1997, verschiedene Konfigurationen von Sicherheitsschaltgeräten dargestellt. Ferner ist auch aus der DE 197 36 183 C1 ein Sicherheitsschaltgerät bekannt.

In der Praxis kommt es sehr häufig vor, daß mehrere Schaltereignisse, bspw. das Betätigen eines Not-Aus-Schalters, das Öffnen einer Tür oder das Durchgreifen eines Lichtvorhangs bspw. UND-verknüpft werden müssen. Hierzu werden mehrere Sicherheitsschaltgeräte in Reihe geschaltet, wobei die Ausgangsklemmen eines Sicherheitsschaltgeräts mit den Eingangsklemmen des nachfolgenden Sicherheitsschaltgerätes verbunden werden.

In vielen Fällen wird neben der UND-Verknüpfung ein hierarchischer Aufbau der Sicherheitsschaltgeräte gewünscht, um bspw. mit einem Schaltereignis, bspw. dem Not-Aus-Schalter, die gesamte Maschine still zu setzen und mit anderen Schaltereignissen, bspw. einem Schutztürschalter, nur einen bestimmten Motor der gesamten Maschine zum Stillstand zu bringen oder im Stillstand zu halten. Ein solcher hierarchischer Aufbau ist bisher über eine entsprechende Verdrahtung möglich und hat sich in der Praxis durchaus bewährt.

Dennoch bleibt der Wunsch, ein aus mehreren Sicherheitsschaltgeräten bestehenden Aufbau flexibler zu machen, so daß maschinenspezifische Verknüpfungen von Ausgangssignalen einzelner Sicherheitsschaltgeräte ohne zusätzliche Verdrahtung leicht möglich wird.

Aus einer Bedienungsanleitung des Firma Leuze lumiflex ist ein modulares Sicherheitsschaltgeräte-System MSI bekannt, bei dem Betriebsarten über DIP-Schalter und eine externe Verdrahtung eingestellt werden können. In einer Betriebsart Muting wird eine überbrückung einer Sicherheitslichtschranke mit einer Lampe angezeigt, deren Funktion geprüft wird. Aus einer weiteren Bediennungsanleitung der Firma Sich ist ein modulares Sicherheitsschaltgeräte-System LCU-P bekannt, bei dem Betriebsarten über ein Display eingestellt werden können. Auch hier wird ein Muting-Zustand oder eine reduzierte Auflösung eines Lichtgitters mit einer über- wachten Lampe angezeigt.

Vor diesem Hintergrund besteht die Aufgabe der vorliegenden Erfindung darin, ein modulares Sicherheitsschaltgeräte-System vorzusehen, das eine flexible Verknüpfung der eingesetzten Sicherheitsschaltgeräte ermöglicht, ohne eine Verdrahtung zur Verknüpfung der einzelnen Sicherheitsschaltgeräte und ohne eine spezielle Verdrahtung für unterschiedliche Betriebsarten, insbesondere der Eingangsmodule vornehmen zu müssen.

Die der Erfindung zugrunde liegende Aufgabe wird mit einem Sicherheitsschaltgeräte-System nach Anspruch 1 gelöst.

Bei dem erfindungsgemäßen Sicherheitsschaltgeräte-System läßt sich somit gezielt die Betriebsart jedes Eingangs- und Ausgangsmoduls über das Steuermodul einstellen und über das Anzeigemittel überprüfen. "Betriebsart" bedeutet bei den Eingangsmodulen bspw., welchem Ausgangsmodul sie zugeordnet sind, d.h. welchem Ausgangsmodul das Ausgangssignal des Eingangsmoduls zugeführt wird. Weitere Betriebsarten der Eingangsmodule können bspw. sein: Anlauftest, Quittierung, Deaktiv, etc. Betriebsarten bei den Ausgangsmodulen sind bspw. unterschiedliche Verzögerungszeiten zum verzögerten Abschalten der Ausgänge, bspw. 0 Sekunden, 0,5 Sekunden oder 1 Sekunde. Unter dem Begriff "sicher" ist zu verstehen, daß die Funktion des Anzeigemittels geprüft wird, so daß eine fehlerhafte Anzeige der Betriebsart ausgeschlossen werden kann.

Der Vorteil dieses modularen Sicherheitsschaltgeräte-Systems liegt somit darin, daß eine einfache und sehr flexible Einstellung und Konfiguration möglich wird. Insbesondere können unterschiedliche Systeme mit dem gleichen Modulaufbau erzielt werden, indem die Zuordnung von Eingangsmodulen zu Ausgangsmodulen verändert wird. Darüber hinaus lassen sich auch hierarchische Systeme aufbauen, bei denen bspw. ein Eingangsmodul auf zwei Ausgangsmodule und weitere Eingangsmodule auf jeweils ein Ausgangsmodul wirken. Diese Einstellungen und Veränderungen lassen sich ohne Änderung der Verdrahtung ausführen, was nicht nur Kosten bei der Wartung bzw. Einrichtung eines solchen Systems spart, sondern auch Fehlerquellen beseitigt, die durch falsche Verdrahtung entstehen können.

Insgesamt läßt sich somit ein Sicherheitsschaltgeräte-System aufbauen, das auf die unterschiedlichsten Bedürfnisse sehr flexibel und einfach konfigurierbar ist, wobei die Konfiguration über ein zentrales Steuermodul erfolgt. Insbesondere lassen sich die Ausgangssignale der Eingangsmodule in beliebiger Weise den Ausgangsmodulen zuführen. Dabei sind die Programme für alle wählbaren Betriebsarten vollständig im Steuermodul abgelegt und von einer Zertifizierungsstelle bspw. der Berufsgenossenschaft geprüft und zugelassen. Durch die Konfiguration werden die gewünschten Betriebsarten, also die gewünschten Programme ausgewählt und das anwendungsspezifische Programm des Sicherheitssystems aus den im Steuermodul abgelegten Standardprogrammen zusammengestellt. Der Vorteil ist, daß die Prüfung einer anwendungssspezifischen Software nicht nötig ist.

Ein weiterer Vorteil des erfindungsgemäßen Sicherheitsschaltgeräte-Systems liegt nicht nur darin, daß der Benutzer sich bei der Einstellung der Betriebsarten auf die jeweilige Anzeige der Betriebsart verlassen kann und somit keine weiteren Hilfsmittel oder Funktionsprüfungen benötigt, sondern ist auch darin zu sehen, daß Fertigungstests rationalisiert werden können, da das Gerät selbständig den Test des Anzeigemittels durchführen kann. Eine visuelle und damit fehlerträchtige Prüfung des Anzeigemittels in der Fertigungskontrolle kann folglich entfallen.

Bei einer Weiterbildung der Erfindung umfaßt das Anzeigemittel eine der Anzahl der wählbaren Betriebsarten entsprechende Zahl von Lichtelementen, vorzugsweise Leuchtdioden. Vorzugsweise ist jedem Lichtelement ein Rückführungselement, vorzugsweise ein Lichtleiter zugeordnet, wobei das Rückführungselement das vom Lichtelement abgestrahlte Licht zu einer Lichtauswerteeinheit führt, die den Zustand des Lichtelements prüft.

Diese Maßnahmen erlauben den Aufbau eines sicheren Anzeigemittels bei geringem Aufwand und Kosten. Das von dem Lichtelement abgestrahlte Licht wird über einen Lichtleiter auf einen Lichtsensor geführt, der ein entsprechendes Signal generiert. Dieses Signal wird dann mit dem Sollsignal verglichen, um eine Aussage treffen zu können, ob das Lichtelement fehlerfrei arbeitet. Der Einsatz von Leuchtdioden als Lichtelemente hat sich als besonders günstig herausgestellt. Darüber hinaus ermöglicht der Einsatz von Lichtelementen an jedem Eingangs- bzw. Ausgangsmodul (dezentrales Anzeigemittel) den Verzicht auf ein teures zentrales Anzeigemittel. Bei Systemen, die eine größere Anzahl von Modulen aufweisen, verringert sich dieser Vorteil allerdings wieder. Selbstverständlich ist es auch denkbar, das Lichtelement auf andere Art und Weise auf Fehlerfreiheit zu testen. Eine Möglichkeit besteht darin, dem Lichtelement, vorzugsweise einer LED, nacheinander zwei unterschiedliche Ströme einzuprägen und die beiden unterschiedlichen Spannungen zu messen. Über einen Komperator kann dann festgestellt werden, ob die beiden Spannungen über bzw. unter einem vorgegebenen Schwellenwert liegen. Gibt es hierbei Abweichungen von einem vorgegebenen Ergebnis, muß ein Fehler vorliegen.

In einer weiteren Ausgestaltung der Erfindung ist das Anzeigemittel als zentrales Display, vorzugsweise als Flüssigkristall-Anzeigevorrichtung ausgebildet. Vorzugsweise sind die Betriebsarten des Eingangsmoduls und/oder des Ausgangsmoduls in zwei unterschiedlichen Arten und/oder in zwei unabhängig voneinander angesteuerten Bereichen des Displays dargestellt, so daß eine sichere Darstellung erreicht wird.

Diese Maßnahmen ermöglichen den Einsatz eines Displays, d.h. eines Bildschirms, um die Betriebsarten der Eingangsmodule und Ausgangsmodule einzustellen, ohne daß Sicherheit verlorengeht. Durch die zwei unterschiedlichen Arten der Darstellung kann der Benutzer nämlich erkennen, ob das Display fehlerhaft ist. Neben der oben genannten Maßnahme sind selbstverständlich auch andere Lösungswege denkbar, das Display sicher zu machen. Ferner bietet ein flächiges Display gegenüber den dezentralen Lichtelementen sehr viel mehr Komfort bei der Einstellung der Betriebsarten. Insbesondere lassen sich graphische Symbole verwenden, die dem Benutzer sehr viel klarer die eingestellten Betriebsarten und den Gesamtaufbau des Systems vermitteln.

In einer alternativen Ausgestaltung der Erfindung kann für ein selbstüberwachtes Display ein selbstleuchtendes Display über einem Bildsensor angebracht werden und so das ausgegebene Bild mit dem tatsächlich angezeigten Bild verglichen werden.

In einer weiteren Ausgestaltung der Erfindung ist das Eingangsmodul zweikanalig aufgebaut und umfaßt Halbleiter-Ausgänge. Vorzugsweise umfaßt das Steuermodul eine Verknüpfungseinheit, die Ausgangssignale der Eingangsmodule miteinander verknüpft, vorzugsweise UND-verknüpft und abhängig von der eingestellten Betriebsart einem Ausgangsmodul zuführt. Vorzugsweise ist das Ausgangssignal des Eingangsmoduls jedem Ausgangsmodul zuführbar, wobei diese Zuordnung von Eingangsmodul zu Ausgangsmodul über die Einstellung der Betriebsart erfolgt.

Selbstverständlich ist es auch möglich, daß die einzelnen Eingangssignale in das Steuermodul eingelesen und dort ausgewertet, verknüpft und den Ausgängen zugeführt werden.

Diese Maßnahmen haben den Vorteil, daß ein sehr flexibel konfigurierbares Sicherheitsschaltgeräte-System aufgebaut werden kann. Insbesondere lassen sich die Ausgangssignale der eingesetzten Eingangsmodule einzelnen oder mehreren der Ausgangsmodule beliebig zuführen. Damit sind unterschiedliche Konfigurationen möglich, die bisher nur durch Änderung der Verdrahtung erreicht werden konnten.

In einer weiteren Ausgestaltung der Erfindung weist das Steuermodul eine Speichereinheit, vorzugsweise als EEPROM, auf, in der die gewählten Betriebsarten des Eingangsmoduls und des Ausgangsmoduls nullspannungssicher ablegbar sind. Die aktuellen Zustände des Eingangsmoduls und des Ausgangsmoduls sind in einer weiteren Speichereinheit, vorzugsweise einem RAM abgelegt.

Diese Maßnahme hat den Vorteil, daß die Betriebsarten und Betriebszustände zentral abgelegt sind, so daß bspw. eine Prüfung des Zustands des gesamten Systems einfach durch Auslesen dieser zentralen Speicher erfolgen kann. Eine Kommunikation mit den einzelnen Modulen für Diagnosezwecke ist folglich nicht notwendig.

In einer weiteren Ausgestaltung der Erfindung ist dem Steuermodul ein Konfigurationsschalter, vorzugsweise ein Schlüsselschalter, zur Umschaltung in einen Programmiermodus zugeordnet. Vorzugsweise umfaßt das Steuermodul eine Eingabeeinheit zur Eingabe der Betriebsarten, wobei die Eingabeeinheit im einfachsten Fall zumindest zwei Cursortasten und eine Bestätigungstaste umfaßt.

Der Einsatz eines Schlüsselschalters hat den Vorteil, daß eine unbeabsichtigte Umschaltung in den Programmiermodus und damit möglicherweise eine Veränderung einzelner Betriebsarten nicht möglich ist. Zur Programmierung ist das System bewußt durch Drehen des Schlüsselschalters in den Programmiermodus umzuschalten.

Der Aufbau einer Eingabeeinheit mit zumindest zwei Cursortasten und einer Bestätigungstaste erlaubt einerseits das gezielte Ansprechen und Einstellen eines Moduls und ermöglicht andererseits eine platzsparende Unterbringung in dem Sicherheitsschaltgeräte-System bei sehr geringen Kosten.

Die Eingabe in die Eingabeeinheit ist nicht sicherheitsgerichtet. Fehlerhafte Eingaben werden durch die sichere Anzeige von der die Konfiguration durchführenden Person erkannt. Es ist deshalb möglich, die Eingabe in die Eingabeeinheit auf andere bekannte Arten durchzuführen. So ist bspw. eine Eingabe über ein Eingabe-Tool auf einem Rechner und einer Infrarot-Schnittstelle (IrDA) in die Eingabeeinheit mit einer Eingabekontrolle über die sichere Anzeige realisierbar. Im Sicherheitsgerät ist die Betriebsart konfiguriert, die angezeigt wird.

Weitere Vorteile und Ausgestaltungen der Erfindung ergeben sich aus der Beschreibung und der beiliegenden Zeichnung.

Die Erfindung wird nachfolgend anhand eines Ausführungsbeispiels mit Bezug auf die Zeichnungen näher erläutert. Dabei zeigen:
- Fig. 1: ein schematisches Blockdiagramm eines modularen Sicherheitsschaltgeräte-Systems gemäß einem ersten Ausführungsbeispiel;
- Fig. 2: ein schematisches Blockdiagramm eines Sicherheitsschaltgeräte-Systems gemäß einem weiteren Ausführungsbeispiel;
- Fig. 3: ein Schaltungsdiagramm, das ausschnittsweise ein Eingangsmodul, ein Steuermodul und ein Ausgangsmodul zeigt;
- Fig. 4: ein Schaltungsdiagramm einer sicheren Anzeige;
- Fig. 5: ein schematisches Blockdiagramm eines Steuermoduls, das in dem in Fig. 2 gezeigten System eingesetzt wird; und
- Fig. 6: eine mögliche graphische Darstellung zur Einstellung der Betriebsarten der Eingangsmodule, wie sie von dem Anzeigemittel gemäß Fig. 5 dargestellt werden könnte.

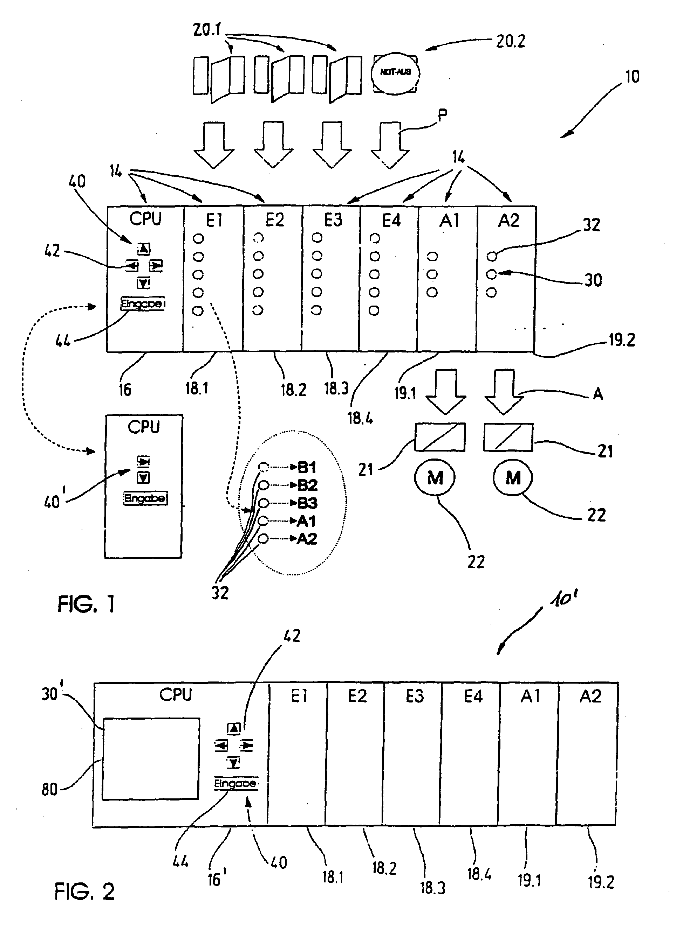

In Fig. 1 ist ein modulares Sicherheitsschaltgeräte-System mit dem Bezugszeichen 10 gekennzeichnet. Dieses Sicherheitsschaltgeräte-System umfaßt eine Vielzahl von nicht dargestellten Modulplätzen, die im vorliegenden Ausführungsbeispiel jeweils ein Modul 14 aufnehmen. Insbesondere ist ein Steuermodul 16, vier Eingangsmodule 18.1 bis 18.4 sowie zwei Ausgangsmodule 19.1 und 19.2 vorgesehen. Im Zusammenhang mit der vorliegenden Erfindung ist unter Modul nicht nur eine bauliche Einheit zu verstehen sondern alternativ auch eine funktionelle Einheit, wobei verschiedene funktionelle Einheiten zu einer baulichen Einheit zusammengefaßt sein können.

Die Eingangsmodule 18.1, 18.2, 18.3 und 18.4 sind eingangsseitig mit Signalgebern verbunden, was mit Pfeilen P angedeutet ist. Bei den Signalgebern, die in Fig. 1 mit dem Bezugszeichen 20 gekennzeichnet sind, handelt es sich bspw. um Schutztürschalter 20.1 oder einen Not-Aus-Schalter 20.2. Im vorliegenden Ausführungsbeispiel ist der Not-Aus-Schalter 20.2 dem Eingangsmodul 18.4 und die anderen Schutztürschalter 20.1 den Eingangsmodulen 18.1, 18.2 bzw. 18.3 zugeordnet.

Die Eingangsmodule 18 enthalten Auswerte- und Steuereinheiten, die die Signale des Signal gebers 20 sicher auswerten. Selbstverständlich ist es auch möglich, die Auswerte-Steuereinheiten zentral in dem Steuermodul 16 vorzusehen. Der grundsätzliche Aufbau solcher Eingangsmodule ist bspw. in "Maschinensicherheit", Winfried Gräf, Hüttig Verlag, 1997, offenbart. Ferner zeigt auch die Anmeldung DE 100 11 211 der vorliegenden Anmelderin den Aufbau solcher Eingangsmodule. Üblicherweise sind diese Eingangsmodule zweikanalig aufgebaut, um die geforderte Sicherheit bei der Auswertung der Eingangssignale zu erzielen. Selbstverständlich ist es auch denkbar, die Eingangsmodule einkanalig aufzubauen, wobei dann eine Überprüfungseinheit zusätzlich vorgesehen ist, um die Signale zu überprüfen.

Die beiden vorgesehenen Ausgangsmodule 19.1 und 19.2 umfassen üblicherweise elektromechanische oder elektronische Schaltelemente, die abhängig von zugeführten Eingangssignalen sicher zwischen zwei Schaltzuständen hin- und herschalten. Das Ausgangssignal des jeweiligen Ausgangsmoduls 19.1, 19.2 wird einem Aktor zugeführt, was mit Pfeilen A angedeutet ist. Bei den Aktoren handelt es sich bspw. um Schütze 21, die die Energieversorgung bspw. eines Motors 22 herstellen oder unterbrechen können.

Fig. 1 läßt weiter erkennen, daß die Eingangs- und Ausgangsmodule 18, 19 jeweils ein Anzeigemittel 30 umfaßen. Im vorliegenden Ausführungsbeispiel ist das Anzeigemittel 30 in Form von mehreren Leuchtdioden 32 realisiert, wobei aus Übersichtlichkeitsgründen lediglich einige der Leuchtdioden mit dem Bezugszeichen 32 gekennzeichnet sind. Insgesamt umfassen die Eingangsmodule 18.1 bis 18.4 im vorliegenden Ausführungsbeispiel jeweils fünf Leuchtdioden und die Ausgangsmodule 19.1 und 19.2 jeweils drei Leuchtdioden. Es versteht sich, daß statt der Leuchtdioden auch andere Lichtelemente zum Einsatz kommen können. Leuchtdioden sind jedoch unter Kostengesichtspunkten besonders vorteilhaft.

Das Steuermodul 16 umfaßt eine Eingabeeinheit 40, die aus mehreren, im vorliegenden Ausführungsbeispiel vier Cursortasten 42 und einer Eingabetaste 44 besteht. Die Verwendung von vier Cursortasten ermöglicht eine sehr komfortable Eingabe, wohingegen die ebenfalls in Fig. 1 gezeigte Alternative 40' nur zwei Cursortasten umfaßt. Dies schränkt den Eingabekomfort zwar etwas ein, ist aber kostengünstiger zu realisieren.

Aus Übersichtlichkeitsgründen ist das Anzeigemittel 30 des Eingangsmoduls 18.1 in Fig. 1 zusätzlich isoliert dargestellt, wobei die LEDs 32 - von oben nach unten - mit B1, B2, B3, A1 und A2 beschriftet sind. Die angegebenen Beschriftungs-Kürzel stehen für unterschiedliche Betriebsarten des Eingangsmoduls, wobei B1 für die Betriebsart "Anlauftest", B2 für die Betriebsart "Quittierung", B3 für "Deaktiv", A1 für eine Zuordnung zu dem ersten Ausgangsmodul und A2 für eine Zuordnung zu dem zweiten Ausgangsmodul steht. Die Betriebsarten selbst werden im weiteren Verlauf der Beschreibung näher erläutert.

Es versteht sich, daß die Anzahl der LEDs rein beispielhaft gewählt wurde. Sofern das jeweilige Eingangsmodul mehr oder weniger Betriebsarten zuläßt, sind auch entsprechend weniger oder mehr LEDs vorgesehen.

Da die Ausgangsmodule 19.1 und 19.2 lediglich in drei verschiedene Betriebsarten gesetzt werden können, sind folglich auch nur drei LEDs 32 vorgesehen. Auch hier ist jeder LED 32 eine Betriebsart, bspw. 0 s, 0,5 s und 1 s, zugewiesen.

Für die weitere Beschreibung wird von einem Sicherheitsschaltgeräte-System 10 ausgegangen, das ein Abschalten beider Motoren 22 über den Notausschalter 20.2 ermöglicht, und bei dem einer der Motoren 22 über zwei Schutztürschalter 20.1 und der andere Motor 22 über den dritten Schutztürschalter 20.1 abschaltbar ist.

Zur Erzielung dieser Funktion ist es somit notwendig, daß das Ausgangssignal des Eingangsmoduls 18.4 beiden Ausgangsmodulen 19.1 und 19.2 zugeführt wird. Ferner müssen die Ausgangssignale der beiden Eingangsmodule 18.1 und 18.2 dem Ausgangsmodul 19.1 und das Ausgangssignal des Eingangsmoduls 18.3 dem zweiten Ausgangsmodul 19.2 zugeführt werden. Die den Ausgangsmodulen 19.1 und 19.2 zugeführten Ausgangssignale der Eingangsmodule werden jeweils miteinander UND-verknüpft. In diesem Zustand des Sicherheitsschaltgeräte-Systems 10 leuchten die Dioden A1 der Eingangsmodule 18.1 und 18.2, die Leuchtdiode A2 des Eingangsmoduls 18.3 und die beiden Leuchtdioden A1 und A2 des Eingangsmoduls 18.4. Anhand der brennenden Leuchtdioden der Eingangsmodule 18.1 bis 18.4 läßt sich also feststellen, auf welches Ausgangsmodul 19.1 bzw. 19.2 das Ausgangssignal des jeweiligen Eingangsmoduls wirkt.

Die Einstellung bzw. Konfiguration des Sicherheitsschaltgeräte-Systems 10 in den vorgenannten Zustand wird wie folgt durchgeführt:

Zunächst wird ein in Fig. 1 nicht dargestellter Schlüsselschalter betätigt, um das Sicherheitsschaltgeräte-System 10 in den Programmiermodus zu schalten. In diesem Programmiermodus werden die Ausgangsmodule 19.1 und 19.2 abgeschaltet, so daß die Aktoren 21 nicht bestromt sind.

Die Auswahl der LED's beginnt an der obersten LED von Modul 18.1 und wird durch jedes Betätigen der waagrechten oder senkrechten Cursortaste 42 an die jeweils benachbarte LED weitergeleitet. Dabei wird die ausgewählte LED durch das Steuermodul 16 über den jeweiligen Ausgabebaustein 61 je nach angezeigtem Zustand kurzzeitig ein- oder ausgeschaltet. Eine angewählte eingeschaltete LED wird lang eingeschaltet und kurz ausgeschaltet. Eine ausgewählte ausgeschaltete LED wird lang ausgeschaltet und kurz eingeschaltet. Somit sind die 4 LED-Zustände: Ein, Aus, Ein-Angewählt sowie Aus-Angewählt unterscheidbar. Bei jeder Betätigung der Eingabetaste 44 wird zwischen den Zuständen Ein-Angewählt und Aus-Angewählt umgeschaltet. Durch Betätigen einer Cursortaste wechselt der Zustand der LED von Ein-Angewählt in Ein oder von Aus-Angewählt in Aus und der Zustand der nächsten LED wechselt von Ein in Ein-Angewählt oder von Aus in Aus-Angewählt.

Ist die Auswahl in einem Eingangsmodul abgeschlossen, wird durch Betätigung der entsprechenden waagerechten Cursortaste 42 ein benachbartes Eingangsmodul ausgewählt und der Vorgang wiederholt. Am Ende der Konfiguration leuchten dann die LEDs für die Betriebsarten A1 bei Eingangsmodul 18.1, A1 bei 18.2, A2 bei 18.3 und A1 und A2 bei 18.4.

Ist die Konfiguration des Sicherheitsschaltgeräte-Systems 10 abgeschlossen, wird der Schlüsselschalter wieder betätigt, so daß vom Programmiermodus in den Normalmodus übergegangen wird. Dabei werden die ausgewählten Betriebsarten der einzelnen Module 18, 19 in einem Speicher im Steuermodul 16 abgelegt.

Es zeigt sich also, daß das Sicherheitsschaltgeräte-System sehr einfach über eine Betätigung der Cursortasten 42 und der Eingabetaste 44 konfigurierbar ist.

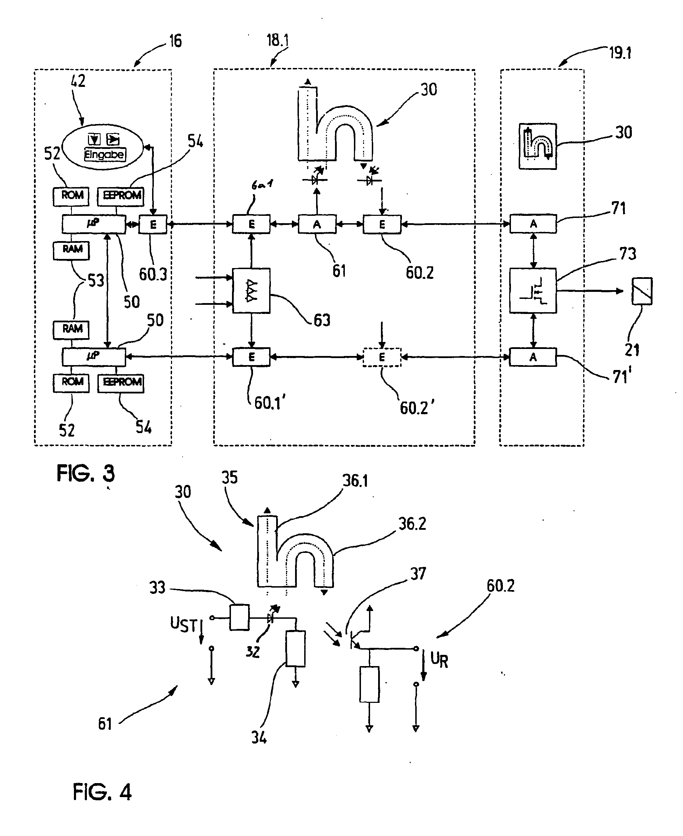

Soll das Sicherheitsschaltgeräte-System 10 europäischen Sicherheitsnormen entsprechen, muß dafür gesorgt werden, daß eine fehlerhafte Programmierung bedingt durch eine fehlerhafte Anzeige der Betriebsart vermieden wird. Aus diesem Grund sind die in Fig. 1 gezeigten Anzeigemittel 30 sicher ausgebildet. Das heißt mit anderen Worten, daß eine fehlerhafte LED 32 von dem jeweiligen Eingangsmodul bzw. Ausgangsmodul erkannt wird und eine Abschaltung des Sicherheitsschaltgeräte-Systems 10 auslöst. Mit Bezug auf die Fig. 4 wird nachfolgend eine Realisierungsmöglichkeit eines sicheren Anzeigemittels erläutert.

In Fig. 4 ist ein Anzeigemittel 30 dargestellt, das eine LED 32 umfaßt. Die LED 32 wird über einen Treiber 33 angesteuert, der über eine Steuerspannung U_{ST} aktiviert wird. In Reihe zu der LED 32 liegt noch ein Widerstand 34.

Das von der LED 32 ausgestrahlte Licht wird in einen Lichtleiter 35 eingekoppelt, der aus zwei Lichtleitfasern 36.1 und 36.2 besteht. Die erste Lichtleitfaser 36.1 führt das Licht der LED 32 nach außen, so daß es vom Benutzer gesehen werden kann. Die zweite Lichtleitfaser 36.2 führt das Licht der LED 32 zu einem Lichtsensor 37, der im vorliegenden Ausführungsbeispiel als Phototransistor ausgebildet ist. Abhängig von dem erfaßten Licht erzeugt der Lichtsensor 37 eine Spannung U_{R}.

Damit ist es möglich, durch einen Vergleich der Steuerspannung U_{ST} und der Rücklesespannung U_{R} eine fehlerhafte Anzeige zu erkennen.

Zum Test der LED-Anzeige kann die Steuerspannung kurzzeitig ein- bzw. ausgeschaltet werden und damit das Ein- bzw. Ausschaltvermögen der LED-Anzeige getestet werden. Die Testimpulse sind kurz, um das Ablesen der LED-Anzeige nicht zu stören.

Der vorgenannte Aufbau ist für jede der in Fig. 1 gezeigten LEDs 32 vorgesehen.

In Fig. 3 sind als Schaltungs-Blockdiagramme das Eingangsmodul 18.1, das Steuermodul 16 und das Ausgangsmodul 19.1 dargestellt, um das Zusammenwirken dieser Module zu erläutern.

Zunächst läßt die Darstellung in Fig. 3 gut erkennen, daß alle drei Module zweikanalig aufgebaut sind, wobei ein Kanal in der oberen Hälfte und der andere Kanal in der unteren Hälfte der Figur dargestellt ist.

Das Steuermodul 16 weist in einem Kanal einen Mikroprozessor bzw. Mikrocontroller 50 auf, der die Steuerung des Sicherheitsschaltgeräte-Systems 10 übernimmt. Über Datenleitungen sind ein Nurlesespeicher (ROM) 52, ein Speicher mit wahlfreiem Zugriff (RAM) 53 sowie ein elektrisch lösch- und wiederbeschreibbarer Speicher (EEPROM) 54 an den Mikroprozessor 50 angebunden. Der zweite Kanal ist entsprechend aufgebaut, wobei zur Erhöhung der Sicherheit häufig verschiedenartige Bausteine zur Erreichung der gleichen Funktionalität eingesetzt werden.

Das Steuermodul 16 umfaßt die bereits erwähnte Eingabeeinheit 40, die über einen Eingabebaustein 60.3 mit dem Mikroprozessor bzw. Mikrocontroller 50 verbunden ist. Eine Datenverbindung besteht auch zwischen den beiden Mikrocontrollern 50 der beiden Kanäle, um Daten vergleichen zu können und bei einer Nicht-Übereinstimmung der Daten beider Kanäle eine Fehlerreaktion auslösen zu können. Der Eingabebaustein 60.3 dient dem Empfang von Steuersignalen, die über die Eingabeeinheit 40 des Steuermoduls 16 erzeugt werden. Der Eingabebaustein 60.3 hat die Aufgabe, das Betätigen der Tasten der Eingabeeinheit einzulesen. Bei jeder Betätigung steuert der Mikrocontroller die LED-Anzeige entsprechend an.

Das Eingangsmodul 18.1, das stellvertretend für alle Eingangsmodule 18.1 bis 18.4 steht, umfaßt in einem Kanal mehrere Ein-und Ausgabebausteine 60 bzw. 61, die über entsprechende Leitungen miteinander verbunden sind.

Der Eingabebaustein 60.1 umfaßt Mittel zur sicheren Auswertung eines Eingangssignals, das über einen Einlesebaustein 63 von dem Signal geber 20.1 geliefert wird. Im vorliegenden Ausführungsbeispiel erfolgt die Auswertung im Steuermodul 16. Dort werden die eingelesenen und über die Leitungen zum Mikroprozessor 50 übertragenen Signale mit den betriebsartabhängigen Vorgaben geprüft.

Der Ausgabebaustein 61 umfaßt die Mittel zur Ansteuerung der LED 32, also bspw. den Treiber 33 und den Widerstand 34. Ferner umfaßt der zweite Eingabebaustein 60.2 die Mittel zur Erfassung des Lichtstrahls der LED 32, also bspw. die Photodiode 37.

Der zweite Kanal des Eingangsmoduls 18.1, der in Fig. 3 in der unteren Hälfte dargestellt ist, umfaßt ebenfalls einen Eingabebaustein 60.1' sowie optional einen Eingabebaustein 60.2'. Dem Eingabebaustein 60.1' kommt ebenfalls die Aufgabe zu, das vom geber 20.1 gelieferte Signal über den zweiten Kanal einzulesen. Die dafür notwendigen Schaltmittel sind bekannt, so daß auf deren genauen Aufbau nicht weiter eingegangen werden muß. Der zweite Eingabebaustein 60.2' ist optional vorgesehen und hat die Aufgabe, ein Rücklesesignal abhängig von der Funktion der LED zu erzeugen, so daß auch diese Information redundant an das Steuermodul 16 geliefert werden kann.

Das in Fig. 3 gezeigte Ausgangsmodul 19.1 umfaßt zwei in funktionaler Hinsicht identische Kanäle, die jeweils einen Ausgabebaustein 71 bzw. 71' umfassen. Der Ausgabebaustein 71 ist über entsprechende Datenleitungen mit dem Mikrocontroller 50 eines Kanals des Steuermoduls 16 verbunden, während der Ausgabebaustein 71' mit dem Mikrocontroller 50 des anderen Kanals des Steuermoduls 16 verbunden ist. Beide Ausgabebausteine 71, 71' leiten die empfangenen Signale an ein schematisch dargestelltes Schaltelement 73 weiter. Dieses Schaltelement 73 umfaßt bevorzugt elektronische Schaltelemente, wobei jedoch auch elektromechanische Schaltelemente einsetzbar sind. Das Schaltelement 73 liefert ein Steuersignal, das dem Schütz 21 zugeführt wird und dieses dann in den sicheren Zustand schaltet, wenn der Signal geber 20.1 betätigt wurde. Zusätzlich kann über nicht gezeigte Ausgabebausteine bsw. im Ausgangsmodul 19.1 das Schaltvermögen des Schaltelements 73 getestet werden. Eine genauere Beschreibung sowohl der grundsätzlichen Funktion des Eingangsmoduls 18 als auch des Ausgangsmoduls 19 findet sich in der bereits zuvor erwähnten Anmeldung DE 100 11 211.

Ferner umfaßt das Ausgangsmodul 19.1 das aus mehreren LEDs bestehende Anzeigemittel 30, das zur Vereinfachung rein schematisch in Form eines Blocks dargestellt ist. Der Aufbau dieses Anzeigemittels 30 entspricht dem im Eingangsmodul 18.1 eingesetzten Anzeigemittel 30, so daß auf eine nochmalige Beschreibung verzichtet werden kann. Die Aktivierung einzelner LEDs des Anzeigemittels 30 erfolgt - wie bereits erwähnt - ebenfalls über die Eingabeeinheit 40 des Steuermoduls 16.

In Fig. 3 sind rein schematisch Verbindungen zwischen den einzelnen Modulen 16, 18 und 19 dargestellt. Damit soll zum Ausdruck kommen, daß Signale zwischen den Modulen übertragen werden. Die Übertragung dieser Signale bzw. Daten kann in unterschiedlicher Art und Weise erfolgen. Eine flexible aber aufwendige Möglichkeit besteht darin, einen Signal- und Datenbus vorzusehen, wie er in unterschiedlichen Ausgestaltungen und Vari-anten bekannt ist. Auch im Bereich der Sicherheitstechnik existieren Buslösungen, die sicher sind. Eine nicht-sichere Kommunikation mit Vorrichtungen außerhalb des Sicherheitsschaltgeräte-Systems könnte zusätzlich über einen sogenannten Feldbus abgewickelt werden.

Eine weitere konstruktiv einfachere Lösung der Datenübertragung besteht darin, ein Schieberegister aufzubauen, deren einzelne Zellen bzw. Register jeweils einem Modul zugeordnet sind. Die zu übertragenden Signale werden von dem jeweiligen Modul dann in dieses Register geschrieben und das Steuermodul 16 kann dann durch Übertragung entsprechender Taktsignale diese Informationen einlesen.

Es versteht sich, daß auch andere Lösungen denkbar sind.

Der Aufbau kann in einzelnen steckbaren Modulen für die Funktionen Signal geber einlesen (Eingangsmodul), Steuern (Steuermodul) und Aktuatorsteuerung (Ausgangsmodul) untergebracht werden, sowie bei gleichem elektrischen Aufbau zur Kostenreduzierung in einem Gehäuse untergebracht werden.

Die Einstellung der Betriebsart des Eingangsmoduls 18.1 läßt sich wie folgt durchführen:

Das Steuermodul 16 wird in den Programmiermodus geschaltet, was den Mikrocontroller 50 dazu veranlaßt, über die Ausgänge 73 den sicheren Zustand herbeizuführen. Die Auswahl der LED's beginnt an der obersten LED von Modul 18.1 und wird durch jedes Betätigen der waagrechten oder senkrechten Cursortaste 42 an die jeweils benachbarte LED weitergeleitet. Dabei wird die ausgewählte LED durch das Steuermodul 16 über den jeweiligen Ausgabebaustein 61 je nach angezeigtem Zustand kurzzeitig ein- oder ausgeschaltet. Eine angewählte eingeschaltete LED wird lang eingeschaltet und kurz ausgeschaltet. Eine ausgewählte ausgeschaltete LED wird lang ausgeschaltet und kurz eingeschaltet. Somit sind die 4 LED-Zustände: Ein, Aus, Ein-Angewählt sowie Aus-Angewählt unterscheidbar. Bei jeder Betätigung der Eingabetaste 44 wird zwischen den Zuständen Ein-Angewählt und Aus-Angewählt umgeschaltet. Durch Betätigen einer Cursortaste wechselt der Zustand der LED von Ein-Angewählt in Ein oder von Aus-Angewählt in Aus und der Zustand der nächsten LED wechselt von Ein in Ein-Angewählt oder von Aus in Aus-Angewählt.

Der Mikrocontroller 50 speichert die getroffene Auswahl der Betriebsart für das Eingangsmodul 18.1 in dem EEPROM-Speicher 54 ab.

Der oben genannte Vorgang wiederholt sich nun für alle weiteren angeschlossenen Eingangs- und Ausgangsmodule 18, 19. Am Ende der Programmierung wird das Steuermodul 16 in den Normalmodus zurückgesetzt, so daß eine Betätigung der Cursortasten 42 bzw. der Eingabetaste 44 ohne Auswirkungen bleibt.

Im Normalbetrieb werden dann die von den Signal gebern 20 gelieferten Signale entsprechend der im EEPROM-Speicher 54 abgelegten Betriebsartenauswahl verarbeitet und den gewählten Ausgangsmodulen 19.1 bzw. 19.2 zugeführt. Für alle auswählbaren Betriebsarten sind die jeweiligen Überwachungs-, Verknüpfungs-und Ansteuer-Programmteile im Sicherheitsschaltgerätesystem gespeichert. Darüber hinaus bleiben die Anzeigemittel 30 weiter aktiviert, so daß der Benutzer die Möglichkeit hat, sich jederzeit über die Konfiguration des Sicherheitsschaltgeräte-Systems 10 zu informieren.

Da der Benutzer zur Programmierung und Überprüfung der Konfiguration auf die Anzeigemittel 30 angewiesen ist, müssen diese - wie bereits erwähnt - sicher ausgelegt sein, so daß eine falsche Konfiguration bedingt durch bspw. nicht funktionierende LEDs ausgeschlossen ist. Diese Sicherheit wird durch einen Vergleich des Ansteuersignals U_{ST} mit dem Rücklesesignäl U_{R} erreicht, so daß im Fehlerfall das Sicherheitsschaltgeräte-System 10 in einen vordefinierten Zustand gebracht werden kann.

Neben den bereits beschriebenen Betriebsarten A1 und A2 lassen sich mit Hilfe der Betriebsart B1 (Anlauftest) Manipulationen an dem dem Eingangsmodul zugeordneten Signal geber aufdekken, indem nach Wiedereinschalten der Anlage der jeweilige Signal geber geöffnet werden muß bzw. geöffnet gewesen sein mußte. In der Betriebsart B2 (Quittierung) muß beispielsweise nach Schließen einer Schutztür (Schließen des entsprechenden Schutztürpositionsschalters) ein dem Eingangsmodul zugeordneter Taster betätigt werden, mit dem der Bediener der Anlage bestätigt, daß sich keine Person im jeweils einsehbaren Gefahrenbereich befindet. In der Betriebsart B3 (deaktiv) ist der Signal geber, beispielsweise die Schutztürüberwachung, nicht in Funktion, was beispielsweise bei Wartungsarbeiten notwendig ist.

Bei den erwähnten Betriebsarten 0s, 0,5s und 1s der Ausgangsmodule 19 handelt es sich um eine entsprechend einstellbare Verzögerungszeit zum Abschalten der Ausgänge. Damit läßt sich ein aktives Abbremsen z.B. eines Motors erreichen, da das Abschal-ten der Energieversorgung verzögert wird. Es versteht sich, daß auch andere oder weitere Betriebsarten denkbar sind.

Ein weiteres Ausführungsbeispiel eines Sicherheitsschaltgeräte-Systems ist in Fig. 2 dargestellt und mit dem Bezugszeichen 10' gekennzeichnet. Die Funktionsweise dieses Sicherheitsschaltgeräte-Systems 10' entspricht jener des in Fig. 1 gezeigten Systems 10, so daß auf eine nochmalige Beschreibung verzichtet werden kann. Nachfolgend soll lediglich auf die Unterschiede eingegangen werden.

Der Unterschied des in Fig. 2 gezeigten Systems 10 besteht darin, daß die dezentralen Anzeigemittel 30 von den Eingangs-und Ausgangsmodulen 18, 19 in das Steuermodul 16' verlagert wurden. Das heißt, daß die einzelnen Eingangs- und Ausgangsmodule 18, 19 keine LEDs 32 zur Anzeige der Betriebsart mehr aufweisen. Statt dessen weist das Steuermodul 16' ein Anzeigemittel 30' auf, das als Display 80 ausgebildet ist. Als Display 80 kann bspw. ein Flüssigkristall (LCD)-Display eingesetzt werden, das mittlerweile zu sehr günstigen Preisen erhältlich ist.

Im einfachsten Fall bildet das Display 80 die LEDs ab, die in dem mit Bezug auf die Fig. 1 beschriebenen ersten Ausführungsbeispiel eingesetzt werden. Die Auswahl der Betriebsarten läßt sich dann in identischer Weise durchführen, wobei der Benutzer die optischen Informationen über die ausgewählten Betriebsarten in diesem Fall zentral über das Display 80 erhält.

Wie bereits erwähnt, ist es zur Erfüllung der verschiedenen Sicherheitsnormen erforderlich, daß das Display 80 sicher ist, so daß eine fehlerhafte Konfiguration bedingt durch ein fehlerhaftes Display ausgeschlossen werden kann.

Eine von mehreren Möglichkeiten, das Display 80 sicher zu machen, besteht darin, das Display in zwei Bereiche zu unterteilen, die identische Informationen auf zwei unterschiedliche Art und Weisen darstellen. Beispielsweise könnte ein Bereich in Normaldarstellung und der andere Bereich in inverser Darstellung gezeigt sein. Der Anwender kann dann durch Vergleich der beiden Darstellungen überprüfen, ob das Display fehlerhaft ist.

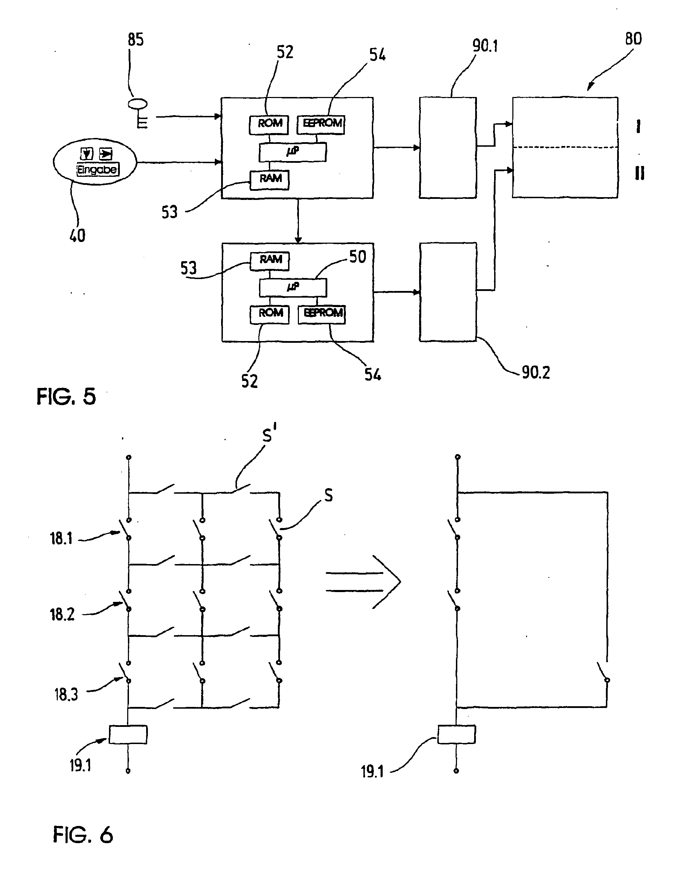

In Fig. 5 ist ein Blockdiagramm dargestellt, das zur Erläuterung dieser Lösung dient. So ist in Fig. 5 wiederum der zweikanalige Aufbau eines Steuermoduls zu erkennen, wobei jeder Kanal einen Mikrocontroller 50 und entsprechende Speichereinheiten 52, 53 und 54 umfaßt. Jedem Mikrocontroller 50 ist eine Display-Ansteuervorrichtung 90.1 bzw. 90.2 zugeordnet. Die Ansteuervorrichtung 90.1 steuert die in Fig. 5 mit I bezeichnete Hälfte des Displays 80 an, während die Ansteuervorrichtung 90.2 die mit II bezeichnete Hälfte des Displays 80 ansteuert. Obgleich das Steuermodul 16 selbst ein fehlerhaftes Display (bspw. schadhafte Pixel des Displays) nicht erkennen kann, wird durch die "zweikanalige" Darstellung der eingestellten Betriebsarten auf dem Display 80 die erforderliche Sicherheit erzielt. Der Benutzer kann durch Vergleich der beiden Anzeigebereiche I, II erkennen, ob eine Beschädigung des Displays 80 vorliegt.

Selbstverständlich ist es auch denkbar, das Display über ein Bilderkennungssystem einzulesen und das tatsächlich angezeigte Bild mit dem Bild, das angezeigt werden soll, in dem Steuermodul zu vergleichen.

Es versteht sich, daß neben diesem Lösungsweg viele andere Möglichkeiten bestehen, das Display 80 sicher zu machen. Eine Möglichkeit ist bspw. in einem Display zu sehen, das eine gleichzeitige doppelte (diversitäre) Darstellung oder eine zeitversetzte doppelte Darstellung bspw. eine Programmierdarstellung und eine Betriebsdarstellung liefert.

Neben der reinen Abbildung der in Fig. 1 dargestellten LED-Lösung zur Anzeige der Betriebsarten kann das Display 80 natürlich auch zur Darstellung komplexer Grafiken bzw. Bildelemente eingesetzt werden. Eine mögliche Konkretisierung ist bspw. in Fig. 6 gezeigt. Hier ist eine Verknüpfungsmatrix mit einzelnen Schaltelementen dargestellt, wobei eine Zeile der Matrix einem Eingangsmodul 18 entspricht. Durch Öffnen oder Schließen der grafisch dargestellten Schaltelemente S lassen sich die Eingangsmodule 18.1, 18.2 und 18.3 in beliebige Art und Weise UND- bzw. ODER-verknüpfen. Das graphische Öffnen und Schließen der Schaltelemente S erfolgt dadurch, daß mit Hilfe der Cursortasten 42 das gewünschte Schaltelement S ausgewählt und durch Betätigen der Eingabetaste 44 überbrückt, aufgetrennt oder als den angeschlossenen Sicherheitsschalter 20 repräsentierender Schalter S konfiguriert wird. Der Schalter S' kann als offen oder geschlossen konfiguriert werden.

In der rechten Hälfte der Fig. 6 ist eine mögliche Verknüpfung der Eingangsmodule dargestellt. So ist durch die geöffneten Schaltelemente S angegeben, daß die Eingangsmodule 18.1 und 18.2 in Reihe geschaltet sind und auf das Ausgangsmodul 19.1 wirken. Parallel zu dieser Reihenschaltung wirkt das Eingangsmodul 18.3 ebenfalls auf das Ausgangsmodul 19.1. Das bedeutet, daß der dem Ausgangsmodul 19.1 zugeordnete Motor 22 zum Stillstand gebracht wird, wenn der dem Eingangsmodul 18.3 zugeordnete Signal geber und zumindest einer der beiden den Eingangsmodulen 18.1 und 18.2 zugeordneten Signal gebern betätigt werden.

Es zeigt sich, daß das Sicherheitsschaltgerät-System 10 gegenüber dem in Fig. 1 dargestellten Ausführungsbeispiel deutlich umfangreicher konfigurierbar ist, da die Ausgangssignale der Eingangsmodule 18 in beliebiger Weise UND- oder ODER-verknüpft werden können. Darüber hinaus ermöglicht die graphische Darstellung dieser Verknüpfungen eine deutlich komfortablere Programmierung und Überprüfung der gewählten Betriebsarten.

Es versteht sich, daß die in Fig. 6 gewählte graphische Darstellung rein beispielhaften Charakter besitzt und durch andere graphische Darstellungen ersetzt werden kann. Beispielsweise wäre auch denkbar, auf einer Seite des Displays 80 die möglichen Verknüpfungselemente und die Eingangs- und Ausgangsmodule als "Bausteine" darzustellen, auf die über die Cursortasten 42 zugegriffen werden kann, um in dem anderen Bereich des Displays eine entsprechende graphische Darstellung der gewünschten Verknüpfungen aufzubauen. Dadurch, daß der Benutzer bei der Auswahl eines Bausteins dieselbe Darstellung des Bausteins im anderen Bereich des Displays 80 erwartet, wird eine Erwartungshaltung erzeugt, die es ermöglicht, daß der Benutzer eine fehlerhafte Darstellung auf dem Display 80 erkennen wird. Zusammenfassend ist also festzustellen, daß sowohl das in Fig. 1 als auch das in Fig. 2 gezeigte Ausführungsbeispiel eines Sicherheitsschaltgeräte-Systems eine Konfiguration von Eingangsmodulen und Ausgangsmodulen in sehr einfacher Art und Weise ermöglicht, ohne daß hardwaremäßige Veränderungen, bspw. in der Verdrahtung, vorgenommen werden müßten. Die Systeme sind sehr flexibel einsetzbar und können immer wieder sehr schnell an neue Anforderungen angepaßt werden.

## Patentansprüche

1. Modulares Sicherheitsschaltgeräte-System zum Ein- und sicheren Ausschalten von Aktoren (21), mit zumindest einem Eingangsmodul (18) zum sicheren Auswerten eines Signalgebers (20) und zum Erzeugen eines Ausgangssignals, und zumindest einem Ausgangsmodul (19) zum sicheren Betätigen des Aktors (21) abhängig von dem Ausgangssignal des Eingangsmoduls (18), wobei zumindest das Eingangsmodul in unterschiedlichen Betriebsarten betreibbar ist, ferner mit einem Steuermodul (16) zum individuellen Einstellen der Betriebsart jedes Eingangs- und Ausgangsmoduls (18, 19), wobei das Steuermodul (16) eine Eingabeeinheit (40) zur Eingabe der Betriebsarten durch eine die Konfiguration durchführende Person und eine Speichereinheit (54) aufweist, in der die von der Person eingestellten Betriebsarten des Eingangsmoduls (18) und des Ausgangsmoduls (19) ablegbar sind, und mit einem Anzeigemittel (30) zur sicheren Anzeige der eingestellten Betriebsart des Eingangsmoduls (18) und/oder des Ausgangsmoduls (19), so dass eine fehlerhafte Konfiguration bedingt durch ein fehlerhaftes Anzeigemittel (30) ausgeschlossen werden kann und sich die Person auf die jeweilige Anzeige der Betriebsart verlassen kann, wobei die von dem Signalgeber (20) gelieferten Signale entsprechend der in der Speichereinheit (54) abgelegten Betriebsartenauswahl verarbeitet und zu den Ausgangsmodulen (19) zugeführt werden.

2. Modulares Sicherheitsschaltgeräte-System nach Anspruch 1, **dadurch gekennzeichnet, daß** das Eingangsmodul (18) und/oder das Ausgangsmodul (19) ein Anzeigemittel (30) umfaßt.

3. Modulares Sicherheitsschaltgeräte-System nach Anspruch 1 oder 2, **dadurch gekennzeichnet, daß** das Anzeigemittel (30) eine der Anzahl der wählbaren Betriebsarten entsprechende Zahl von Lichtelementen (32), vorzugsweise Leuchtdioden umfaßt.

4. Modulares Sicherheitsschaltgeräte-System nach Anspruch 3, **dadurch gekennzeichnet, daß** jedem Lichtelement (32) ein Rückführungselement (35, 36.2), vorzugsweise ein Lichtleiter, zugeordnet ist, das das vom Lichtelement (32) abgestrahlte Licht zu einer Lichtauswerteeinheit (37) führt, die den Zustand des Lichtelements (32) prüft.

5. Modulares Sicherheitsschaltgeräte-System nach Anspruch 1, **dadurch gekennzeichnet, daß** das Anzeigemittel (30) als zentrales Display (80), vorzugsweise als Flüssigkristall-Anzeigevorrichtung, ausgebildet ist.

6. Modulares Sicherheitsschaltgeräte-System nach Anspruch 5, **dadurch gekennzeichnet, daß** die Betriebsarten des Eingangsmoduls (18) und des Ausgangsmoduls (19) in zwei unterschiedlichen Arten und/oder in zwei unabhängig voneinander angesteuerten Bereichen des Displays (80) dargestellt werden, so daß eine sichere Darstellung erreicht wird.

7. Modulares Sicherheitsschaltgeräte-System nach Anspruch 5, **dadurch gekennzeichnet, daß** das Display (80) als selbstleuchtendes Display mit Bilderkennungseinrichtung ausgebildet ist.

8. Modulares Sicherheitsschaltgeräte-System nach einem der vorhergehenden Ansprüche, **dadurch gekennzeichnet, daß** das Eingangsmodul (18) zweikanalig aufgebaut ist und einen Halbleiter-Ausgang umfaßt.

9. Modulares Sicherheitsschaltgeräte-System nach einem der vorhergehenden Ansprüche, **dadurch gekennzeichnet, daß** das Steuermodul eine Verknüpfungseinheit (50) umfaßt, die Ausgangssignale der Eingangsmodule (18) miteinander verknüpft und abhängig von der eingestellten Betriebsart einem Ausgangsmodul (19) zuführt.

10. Modulares Sicherheitsschaltgeräte-System nach einem der vorhergehenden Ansprüche, **dadurch gekennzeichnet, daß** das Ausgangssignal des Eingangsmoduls (18) jedem Ausgangsmodul (19) zuführbar ist, wobei diese Zuordnung von Eingangsmodul (18) zu Ausgangsmodul (19) über die Einstellung der Betriebsart erfolgt.

11. Modulares Sicherheitsschaltgeräte-System nach einem der vorhergehenden Ansprüche, **dadurch gekennzeichnet, daß** die Speichereinheit (54) als EEPROM ausgebildet ist.

12. Modulares Sicherheitsschaltgeräte-System nach einem der vorhergehenden Ansprüche, **dadurch gekennzeichnet, daß** dem Steuermodul (16) ein Konfigurationsschalter, vorzugsweise ein Schlüsselschalter (85), zur Umschaltung in einen Programmiermodus zugeordnet ist.

13. Modulares Sicherheitsschaltgeräte-System nach einem der vorhergehenden Ansprüche, **dadurch gekennzeichnet, daß** die Eingabeeinheit (40) zumindest zwei Cursortasten (42) und eine Bestätigungstaste (44) umfaßt.

14. Modulares Sicherheitsschaltgeräte-System nach einem der Ansprüche 1 bis 13, **dadurch gekennzeichnet, daß** die Betriebsarten bei dem zumindest einen Eingangsmodul (18) zumindest eine der folgenden Betriebsarten beinhalten: Zuordnung des Eingangsmoduls (18) zu einem oder mehreren Ausgangsmodulen (19), Anlauftest, Quittierung und Deaktivierung.

15. Modulares Sicherheitsschaltgeräte-System nach einem der Ansprüche 1 bis 14, **dadurch gekennzeichnet, daß** für alle wählbaren Betriebsarten Programme in dem Steuermodul (16) abgelegt sind, wobei die gewünschten Betriebsarten in Form von gewünschten Programmen auswählbar sind.

## Claims

1. A modular safety switching device system for switching on and fail-safely switching off actuators (21), comprising at least one input module (18) for fail-safely evaluating a signal transmitter (20) and for generating an output signal, and at least one output module (19) for fail-safely actuating the actuator (21) in response to the output signal from the input module (18), wherein at least the input module can be operated in different operating modes, further comprising a control module (16) for individually setting the operating mode of each input and output module (18, 19), wherein the control module (16) comprises an input unit (40) for the input of the operating modes by a person who does the configuration, and wherein the control module (16) comprises a memory unit (54) in which the operating modes of the input module (18) and the output module (19) selected by the person can be stored, and comprising a display means (30) for fail-safely displaying the set operating mode of the input module (18) and/or the output module (19), such that an erroneous configuration caused by a faulty display means (30) can be ruled out and the person can rely on the respective display of the operating mode, wherein signals provided from a signal transmitter (20) are processed and supplied to the output modules (19) in accordance with the operating mode selections stored in the memory unit (54).

2. The modular safety switching device system of claim 1, **characterized in that** the input module (18) and/or the output module (19) comprises a display means (30).

3. The modular safety switching device system of claim 1 or 2, **characterized in that** the display means (30) comprises a number of optical elements (32), preferably light-emitting diodes, corresponding to the number of selectable operating modes.

4. The modular safety switching device system of claim 3, **characterized in that** each optical element (32) is assigned a feedback element (35, 36.2), preferably an optical conductor, which guides the light emitted by the optical element (32) to a light evaluation unit (37), which checks the state of the optical element (32).

5. The modular safety switching device system of claim 1, **characterized in that** the display means (30) is implemented as a central display (80), preferably as a liquid crystal display device.

6. The modular safety switching device system of claim 5, **characterized in that** the operating modes of the input module (18) and of the output module (19) are displayed in two different types and/or in two mutually independently driven areas of the display (80), so that a fail-safe representation is achieved.

7. The modular safety switching device system of claim 5, **characterized in that** the display (80) is implemented as a self-luminous display with an image recognition device.

8. The modular safety switching device system of any of the preceding claims, **characterized in that** the input module (18) is implemented with two channels and comprises a semiconductor output.

9. The modular safety switching device system of any of the preceding claims, **characterized in that** the control module comprises a logic linking unit (50), which links output signals from the input modules (18) with one another and feeds them to an output module (19) in response to the set operating mode.

10. The modular safety switching device system of any of the preceding claims, **characterized in that** the output signal from the input module (18) can be fed to each output module (19), this assignment of input module (18) to output module (19) being carried out via the setting of the operating mode.

11. The modular safety switching device system of any of the preceding claims, **characterized in that** the memory unit (54) is implemented as an EEPROM.

12. The modular safety switching device system of any of the preceding claims, **characterized in that** the control module (16) is assigned a configuration switch, preferably a key switch (85), for changing over into a programming mode.

13. The modular safety switching device system of any of the preceding claims, **characterized in that** the input unit (40) comprises at least two cursor keys (42) and a confirmation key (44).

14. The modular safety switching device system of any of claims 1 to 13, **characterized in that** the operating modes of the at least one input module (18) comprise at least one of the following operating modes: assignment of the input module (18) to one or more output modules (19), start-up test, acknowledgement, and deactivation.

15. The modular safety switching device system of any of claims 1 to 14, **characterized in that** programs for all selectable operating modes are stored in the control module (16), wherein the desired operating modes are selectable in the form of desired programs.

## Revendications

1. Système modulaire de commutateurs de sécurité pour la connexion et la déconnexion sûres d'actionneurs (21), avec au moins un module d'entrée (18) pour l'exploitation sûre d'un émetteur de signaux (20) et pour la génération d'un signal de sortie, et au moins un module de sortie (19) pour la commande sûre de l'actionneur (21) en fonction du signal de sortie du module d'entrée (18), au moins le module d'entrée étant exploitable sous différents modes de service, et également avec un module de commande (16) pour le réglage individuel du mode de service de chaque module d'entrée et de sortie (18, 19), le module de commande (16) comprenant une unité de saisie (40) pour la saisie des modes de service par une personne effectuant la configuration et une unité de mémoire (54), dans laquelle les modes de service du module d'entrée (18) et du module de sortie (19), réglés par la personne, sont archivables, et avec un moyen d'indication (30) pour l'indication sûre du mode de service réglé pour le module d'entrée (18) et/ou le module de sortie (19), de sorte qu'une configuration erronée due à un moyen d'indication (30) défectueux puisse être exclue et que la personne puisse se fier à l'affichage respectif du mode de service, les signaux émis par l'émetteur de signaux (20) étant traités en fonction des modes de service stockés dans l'unité de mémoire (54) et acheminés vers les modules de sortie (19).

2. Système modulaire de commutateurs de sécurité selon la revendication 1, **caractérisé en ce que** le module d'entrée (18) et/ou le module de sortie (19) comprennent un moyen d'indication (30).

3. Système modulaire de commutateurs de sécurité selon la revendication 1 ou 2, **caractérisé en ce que** le moyen d'indication (30) comprend un nombre d'éléments lumineux (32), de préférence des diodes électroluminescentes, correspondant au nombre des modes de service sélectionnables.

4. Système modulaire de commutateurs de sécurité selon la revendication 3, **caractérisé en ce qu'**à chaque élément lumineux (32) est affecté un élément de retour d'asservissement (35, 36.2), de préférence un guide d'ondes lumineuses, lequel conduit la lumière diffusée par l'élément lumineux (32) vers une unité d'évaluation lumineuse (37) contrôlant l'état de l'élément lumineux (32).

5. Système modulaire de commutateurs de sécurité selon la revendication 1, **caractérisé en ce que** le moyen d'indication (30) est configuré comme un afficheur central (80), de préférence comme un dispositif d'affichage à cristaux liquides.

6. Système modulaire de commutateurs de sécurité selon la revendication 5, **caractérisé en ce que** les modes de service du module d'entrée (18) et du module de sortie (19) sont représentés sous deux formes différentes et/ou dans deux zones de l'afficheur (80), commandées indépendamment l'une de l'autre, de manière à obtenir une représentation sûre.

7. Système modulaire de commutateurs de sécurité selon la revendication 5, **caractérisé en ce que** l'afficheur (80) est configuré comme un afficheur autolumineux à dispositif de reconnaissance d'image.

8. Système modulaire de commutateurs de sécurité selon l'une des revendications précédentes, **caractérisé en ce que** le module d'entrée (18) est à structure à deux voies et comprend une sortie semiconductrice.

9. Système modulaire de commutateurs de sécurité selon l'une des revendications précédentes, **caractérisé en ce que** le module de commande comprend une unité de couplage (50), qui couple entre eux les signaux de sortie des modules d'entrée (18) et les conduit vers un module de sortie (19) en fonction du mode de service réglé.

10. Système modulaire de commutateurs de sécurité selon l'une des revendications précédentes, **caractérisé en ce que** le signal de sortie du module d'entrée (18) est conductible vers chaque module de sortie (19), cette affectation de module d'entrée (18) à module de sortie (19) ayant lieu par réglage du mode de service.

11. Système modulaire de commutateurs de sécurité selon l'une des revendications précédentes, **caractérisé en ce que** l'unité de mémoire (54) est conformée en EEPROM.

12. Système modulaire de commutateurs de sécurité selon l'une des revendications précédentes, **caractérisé en ce qu'**un commutateur de configuration, de préférence un commutateur à serrure (85), est affecté au module de commande (16) pour la commutation vers un mode de programmation.

13. Système modulaire de commutateurs de sécurité selon l'une des revendications précédentes, **caractérisé en ce que** l'unité de saisie (40) comprend au moins deux touches curseur (42) et une touche de confirmation (44).

14. Système modulaire de commutateurs de sécurité selon l'une des revendications 1 à 13, **caractérisé en ce que** les modes de service comprennent, pour le ou les modules d'entrées (18), au moins un des modes de service suivants : affectation du module d'entrée (18) à un ou plusieurs modules de sortie (19), test de démarrage, acquittement et désactivation.

15. Système modulaire de commutateurs de sécurité selon l'une des revendications 1 à 14, **caractérisé en ce que** pour tous les modes de service sélectionnables, des programmes sont archivés dans le module de commande (16), les modes de service souhaités étant sélectionnables sous forme de programmes souhaités.
